# EUROPEAN PATENT APPLICATION

(11) **EP 1 586 679 A1**
(43) Date of publication of application: **19.10.2005**
(21) Application number: 04702072.2
(22) Date of filing: 14.01.2004
(51) Int. Cl.: C25D 7/10, F16C 33/12

(54) **METAL PLATING COATING FILM HAVING SLIDING FUNCTION AND ARTICLE COATED THEREWITH**

(30) Priority: 16.01.2003 JP 2003008849
(71) Applicant: Chuetsu Metal Works Co., Ltd., Nakanikawa-gun, Toyama 930-0298 (JP); Nomura Plating Co., Ltd, Osaka-shi, Osaka 555-0033 (JP)
(72) Inventor: NAKAJIMA, Kunio, Chuetsu Metal Works Co., Ltd., Nakanikawa-gun, Toyama 930-0298 (JP); YAGO, Wataru, Chuetsu Metal Works Co., Ltd., Nakanikawa-gun,T oyama 930-0298 (JP); ICHIDA, Kenichi, Chuetsu Metal Works Co., Ltd., Nakanikawa-gun, Toyama 930-0298 (JP); TAKEUCHI, Kazuo, Chuetsu Metal Works Co., Ltd., Nakanikawa-gun, Toyama 930-0298 (JP); IKEDA, Tokumi, Nomura Plating Co., Ltd., Osaka-shi, Osaka5 55-0033 (JP); NAKANIWA, Kunio, Nomura Plating Co., Ltd., Osaka-shi, Osaka 555-0033 (JP)
(74) Representative: Hiltl, Elmar
(86) International application number: PCT/JP2004/000211
(87) International publication number: WO 2004/063426

(57) **Abstract**

A metal plating coating film substantially free of lead, **characterized in that** it comprises an alloy layer or simple metal layer having Hv value of 60 or more as an undercoat layer and alloy layer or simple metal layer having a Hv value of 40 or less as an upper layer. The metal plating coating film is harmless to a human body and the environment, and exhibits excellent sliding charachteristics.

## Description

### TECHNICAL FIELD

The present invention relates to an electrodeposited film for sliding parts, which is superior in seizing resistance and wear resistance, and sliding parts coated therewith.

### BACKGROUND ART

Sliding parts have presently been employed in all technical fields as bearing members of general industrial machinery in generating stations and factories, beginning with transportation such as aircraft, shipping and motor vehicles. Copper alloys such as a Cu-Zn-Mn-Si-Pb-based brass material (DIN17660 CuZn40A12) and a Cu-Zn-Sn-Pb-based bronze material (JIS H5120 CAC406), which are superior in seizing resistance, have been known as materials of the parts for sliding, and the following have widely been employed: bimetallic sliding parts which are obtained by sintering or thermal spraying a film comprising copper alloys such as the above-mentioned brass material and bronze material on an iron-based base material.

As described above, copper alloy has sliding properties favorable for seizing resistance and wear resistance,and thereby is appropriate as a material for a sliding portion, while lead is generally added to copper alloy exhibiting favorable sliding properties.

Recently, lead poisoning has become a problem, and it has been feared that a bad influence is exerted on the environment and the human body, so that worldwide regulation against the use of lead has become severe. Similarly, with regard to materials of sliding parts, it has been requested that the materials to be used are unleaded. Copper alloy to which lead is added is not necessarily regarded as a material in consideration of nowaday environmental countermeasures; however, it has actually been utilized due to favorable sliding properties thereof. That is to say, it is believed that the coexistence of unleading and favorable sliding properties is extremely difficult.

Plastic molding such as precision forging is occasionally employed for the molding of parts for sliding from economical viewpoint; however, bronze material exhibiting favorable sliding properties as copper alloy has trouble such that cracks are easily caused in plastic forming processes, and thereby has difficulty in the molding into sliding parts in complicated shapes by precision forging. Under the present circumstances, therefore, in the case of manufacturing sliding parts in complicated shapes by using bronze material, the shape of sliding parts is first divided into parts in simple shapes composing the shape thereof, which are each subjected to cutting work and then joined mechanically to manufacture sliding parts. Accordingly, in manufacturing sliding parts made of bronze material in complicated shapes, their manufacturing processes become so extremely intricate and economically unfavorable.

In addition, another problem is that copper alloy containing lead is generally low in strength and high in specific gravity as compared with steel materials. Therefore, the coating of steel-based materials with a film of copper alloy by thermal spraying process and sintering process allows sliding parts to be manufactured with the intention of achieving high strength and light weight; however, the peculiar problem is that thermal spraying process has material loss on the basis of a poor thermal spraying efficiency, and sintering process requires high temperatures, and so on. Also, these processes absolutely need postprocessing such as grinding and cutting for the purpose of securing shape accuracy, and it is inevitable that sliding parts manufactured in these ways cost relatively more than integral parts made of only copper alloy.

In order to solve the above-mentioned problems, the development of sliding parts, which contain no lead and have favorable sliding properties, has been disclosed so far, such sliding parts(refer to Patent Literatures 1 to 4) that a base material is coated with an alloy single layer film of one kind of tin, indium or silver and bismuth, and that a base material is previously coated with an alloy layer of copper and tin by lining and additionally coated with the above-mentioned alloy single layer; however, sliding properties thereof do not necessarily compare with those of copper alloy containing lead, and it is greatly difficult to form a thin layer by lining, whereby the problem is that it is difficult to uniform the obtained layer.

In view of these problems, the development of materials for sliding, which are superior in sliding properties and easily manufacturing, has been requested in substitution for conventional sliding parts made of only copper alloy containing lead and sliding parts such that a base material is coated with a film of copper alloy. An electrodeposited film of the present invention is not merely endowed with a favorable sliding function but also contains no lead at all in components, so that sliding parts coated with this electrodeposited film have favorable sliding properties, and are harmless to the human body and the environment in the case of being discarded as industrial wastes in manufacturing processes, and additionally are allowed to intend to achieve light weight and/or high strength as compared with integral-type sliding parts made of copper alloy in the case of not using copper alloy for a base material.

An electrodeposited film of the present invention can easily be used for coating a base material without undergoing particularly intricate working processes, and additionally can be adapted to sliding parts having complicated shapes, which film can be conceived to be an economically superior material by reason of having no thermal influence on a base material and being superior in the maintenance of surface flatness and shape accuracy to thereby allow postprocessing such as grinding and cutting to be rendered needless.
(PATENT LITERATURE 1)
   Japanese Unexamined Patent Publication No. 10-330871
(PATENT LITERATURE 2)
   Japanese Unexamined Patent Publication No. 11-257355
(PATENT LITERATURE 3)
   Japanese Patent No. 324977
(PATENT LITERATURE 4)
   Japanese Unexamined Patent Publication No. 11-50296

### DISCLOSURE OF THE INVENTION

The present invention is intended to provide an electrodeposited film as described above, which is harmless to the human body and the environment, and can be performed industrially favorably and is superior in sliding properties, and to provide sliding parts which are coated with the above electrodeposited film.

The inventors of the present invention first had a conception that a surface of a base material is coated with a single layer film, and then studied so earnestly as to obtain a film capable of performing favorable sliding properties in a single layer, but could not obtain a satisfactory film. The inventors studied about the kind of element or alloy and the ratio of alloy having wear resistance, conformability and lubricity, and manufactured various films in plural layers comprising two layers such that a hard film is in an upper layer and a soft film is in an upper layer to evaluate sliding properties thereof. As a result, the inventors of the present invention have created a multilayer electrodeposited film, which comprises an alloy layer or a simple metal layer with an Hv value of not less than 60, in an upper layer and an alloy layer or a simple metal layer with an Hv value of not more than 40 thereon, and have found that the multilayer electrodeposited film can solve such problems in the prior art.

Further, the inventors of the present invention have found that an electrodeposited film preferably comprises double layers such that (a) a simple silver layer, (b) an alloy layer of silver and antimony, (c) an alloy layer of copper and tin or zinc, (d) a ternary alloy layer of copper, tin and zinc, (e) a simple zinc layer, or (f) an alloy layer of zinc and copper, in a under layer, and (g) a simple tin layer, (h) an alloy layer of tin and copper and/or silver, (i) an simple indium layer, or (j) an alloy layer of indium and silver, in an upper layer, and that this electrodeposited film is equal or higher in sliding properties such as seizing resistance and wear resistance in comparison with copper alloy conventionally used, and that the environmental and manufacturing problems occurred in the conventional products can be solved.

That is to say, the present invention relates to:
(1) An electrodeposited film wherein an alloy layer or a simple metal layer with an Hv value of not less than 60 is applied to form a under layer, and an alloy layer or a simple metal layer with an Hv value of not more than 40 is applied to form an upper layer,
(2) An electrodeposited film wherein (a) a simple silver layer, (b) an alloy layer of silver and antimony, (c) an alloy layer of copper and tin or zinc, (d) a ternary alloy layer of copper, tin and zinc, (e) a simple zinc layer, or (f) an alloy layer of zinc and copper is applied to form an under layer, and (g) a simple tin layer, (h) an alloy layer of tin and copper and/or silver, (i) a simple indium layer, or (j) an alloy layer of indium and silver is applied to form an upper layer,
(3) The electrodeposited film according to the above (1) or (2), wherein the amount of tin contained in the upper layer is 90 to 100 weight % of the upper layer when the upper layer is (h) an alloy layer of tin and copper and/or silver,
(4) The electrodeposited film according to the above (1) or (2), wherein the amount of indium contained in the upper layer is 60 to 100 weight % of the upper layer when the upper layer is (j) an alloy layer of indium and silver,
(5) The electrodeposited film according to the above (1) or (2), wherein the amount of silver contained in the under layer is 90 to 100 weight % of the under layer when the under layer is (b) an alloy layer of silver and antimony,
(6) The electrodeposited film according to the above (1) or (2), wherein the amount of copper contained in the under layer is 50 to 99 weight % of the under layer when the under layer is (c) an alloy layer of copper and tin or zinc, or (d) a ternary alloy layer of copper, tin and zinc,
(7) The electrodeposited film according to the above (1) or (2), wherein the amount of zinc contained in the under layer is 60 to 100 weight % of the under layer when the under layer is (f) an alloy layer of zinc and copper,
(8) The electrodeposited film according to any one of the above (1) to (7), wherein the under layer has a thickness of 1 to 1,000 µm and the upper layer has a thickness of 1 to 200 µm,
(9) Sliding parts wherein the surface of a base material is coated with the electrodeposited film according to any one of the above (1) to (8), and
(10) The sliding parts according to the above (9), wherein the base material is steel, stainless steel, aluminum, aluminum alloy, titanium, titanium alloy, copper, copper alloy or ceramics.

### BRIEF DESCRIPTION OF THE DRAWINGS

Fig. 1 is a view showing an outline of a thrust wear resistance testing device.
Fig. 2 is a detail view of a test piece subject to a thrust wear resistance test.
Fig. 3 is a detail view of a mating material used in a thrust wear resistance test.

With regard to references Nos. in Figs., 1 denotes a mating material, 2 denotes a thermocouple, 3 denotes a lubricating oil, 4 denotes a test piece, 5 denotes a fixing jig for test piece, 6 denotes an overflow outlet for a lubricating oil, 7 denotes a supply port for a lubricating oil and 8 denotes a rotation axis.

### BEST MODE FOR CARRYING OUT THE INVENTION

An under layer in the present invention is a hard alloy layer or simple metal layer having bearing alloy or main components thereof (such as copper, silver, zinc, etc.) and components to which other elements for curing them are added, which layer has an Hv value of not less than 60. An upper layer in the present invention is an alloy layer or a simple metal layer having favorable conformability and lubricity, which layer has an Hv value of not more than 40. Hv value denotes Vickers hardness. Preferable examples of an upper layer and an under layer are further described hereinafter.

An electrodeposited film of the present invention is preferably a film composed of two layers comprising an under layer and an upper layer, characterized in that the under layer is (a) a simple silver layer, (b) an alloy layer of silver and antimony, (c) an alloy layer of copper and tin or zinc, (d) a ternary alloy layer of copper, tin and zinc, (e) a simple zinc layer, or (f) an alloy layer of zinc and copper, and the upper layer is (g) a simple tin layer, (h) an alloy layer of tin and copper and/or silver, (i) an simple indium layer, or (j) an alloy layer of indium and silver.

Anelectrodepositedfilmof the present invention exhibiting superior sliding properties is detailed hereinafter. For distinction, typically, in an alloy consisting of tin and copper, an alloy such that the ratio of tin to alloy is higher, for example, Sn:Cu=approximately 98:approximately 2 by weight is referred to as an alloy of tin and copper (Sn-Cu), while an alloy such that the ratio of copper to alloy is higher, for example, Sn:Cu=approximately 10:approximately 90 by weight is referred to as an alloy of copper and tin, or bronze (Cu-Sn). Similarly, for distinction, in an alloy of copper and zinc, an alloy such that the ratio of copper to alloy is higher is referred to as an alloy of copper and zinc (Cu-Zn), while an alloy such that the ratio of zinc to alloy is higher is referred to as an alloy of zinc and copper (Zn-Cu), and the present invention also conforms thereto. A ternary alloy of copper, tin and zinc (Cu-Sn-Zn), and a ternary alloy of tin, copper and silver (Sn-Cu-Ag) signify ternary alloys such that the weight ratio of copper is highest and such that the weight ratio of tin is highest, respectively. In the present description, an alloy such that the ratio of copper to alloy is higher is hereinafter referred to as bronze.

With respect to an under layer of an electrodeposited film of the present invention, it is preferable that the silver content in an under layer is approximately 90 to 100 weight % in the case (b) where an under layer comprises an alloy layer of silver and antimony, the copper content in an under layer is approximately 50 to 99 weight % in the case of (c) where an under layer comprises an alloy layer of copper and tin or zinc, or (d) where an under layer comprises a ternary alloy layer of copper, tin and zinc, and the content of zinc in an under layer is approximately 60 to 100 weight % in the case of (f) where an under layer comprises an alloy layer of zinc and copper.

It is preferable that the content of tin and the content of indium in an upper layer are approximately 90 to 100 weight % and approximately 60 to 100 weight %, respectively in the case where tin or indium is contained in an upper layer of an electrodeposited film of the present invention.

One member selected from the group consisting of (a) a simple silver layer, (b) an alloy layer of silver and antimony, (c-1) an alloy layer of copper and tin (bronze), (c-2) an alloy layer of copper and zinc, (d) a ternary alloy layer of copper, tin and zinc, (e) a simple zinc layer, and (f) an alloy layer of zinc and copper is subjected to an under layer, and one member selected from the group consisting of (g) a simple tin layer, (h-1) an alloy layer of tin and copper, (h-2) an alloy layer of tin and silver, (h-3) a ternary alloy layer of tin, copper and silver, (i) a simple indium layer, and (j) an alloy layer of indium and silver is subjected to an upper layer, and then the constitution of plural layers in combination of the upper layer and the under layer allows an electrodeposited film of the present invention to first become a film which is superior in seizing resistance and wear resistance and exhibits favorable sliding properties. In addition, the use of plating technique allows flatness and surface shape accuracy of a film to be easily obtained without postprocessing such as grinding and cutting, which technique is extremely favorable in view of a construction method.

Further, an electrodeposited film of the present invention is in great consideration of safety to the human being and the environment by reason of containing no lead in components thereof.

An electrodeposited film of the present invention may contain elements such as nickel, silicon, aluminum, iron, oxygen, magnesium and manganese in addition to essential constituent elements of an electrodeposited film of the present invention, such as copper, tin, silver, antimony, zinc and indium. A part of these elements are previously contained inevitably in an agent composing a plating solution used for electroplating to be subject to eutectoid during the formation of a film on a base material and occasionally become inevitable impurities. The total content of these inevitable impurities is within a range capable of maintaining in a predetermined range the content of copper, tin, silver, antimony, zinc and indium as essential constituent elements of an electrodeposited film of the present invention, which total content is within a range of not hindering the object of the present invention. These impurities substantially contain no lead.

A film of the present invention is formed by typically subjecting a base material to plating treatment to thereby first be coated to a surface of the base material with the above-mentioned under layer and subsequently be coated to a surface of the under layer with the above-mentioned upper layer.

The quality of a base material to be coated may be any one and is not particularly limited if a material is capable of being used as a base material of sliding parts, specifically including steels such as carbon steel (for example, S35C) and alloy steel, aluminum, aluminum alloy, titanium, titanium alloy, copper, copper alloy, stainless steel or ceramics. A base material of sliding parts is typically manufactured through the molding into a desirable shape by using means such as casting, precision forging, machining and presswork, and also a base material to be employed for the present invention may be manufactured by using these publicly known means. Even though a base material is in a complicated shape, the coating with a film of the present invention by using plating technique corresponding to a base material allows sliding parts in all shapes to be easily manufactured without undergoing intricate manufacturing processes.

A plating process of coating a base material with an electrodeposited film is not particularly limited, for example, including electroplating, dry plating, electroless plating and hot-dipping, and an electroplating process is particularly preferably used in the present invention. More specific embodiment of preferable electroplating is hereinafter described in the present invention.

An electrodeposited film of the present invention is composed of double layers comprising an under layer and an upper layer, and before coating a base material with an under layer, it is preferable to previously perform pretreatments corresponding to raw material for a base material, such as degreasing, electrolytic degreasing, pickling and strike plating by silver, copper and the like. According to the present invention, in the case where (a) a simple silver layer or (b) an alloy layer of silver and antimony is applied to an under layer, a cyanide bath, a silver nitrate bath and a phosphate bath can be utilized as a bath to be used for electroplating a base material with an under layer, among which cyanide bath is particularly preferable in view of the stability of a solution and the easiness of a plating operation. In the case where (c) an alloy layer of copper and tin or zinc, (d) a ternary alloy layer of copper, tin and zinc, (e) a simple zinc layer, or (f) an alloy layer of zinc and copper is applied to an under layer, a cyanide bath and a pyrophosphate bath are preferable, which cyanide bath is still preferable in view of the stability of a film and the stability of alloy ratio. In the case where (g) a simple tin layer, or (h) an alloy layer of tin and copper and/or silver is applied to form an upper layer, any one of a sulfuric acid bath, an organic acid bath and an alkaline bath is used for convenience as a bath to be used for electroplating with an upper layer, among which sulfuric acid bath or organic acid bath is particularly preferable. In the case where (i) a simple indium layer is subjected to an upper layer, an organic acid bath is preferable. In the case where (j) an alloy layer of indium and silver is subjected to an upper layer, a cyanide bath, a silver nitrate bath and a phosphate bath can be utilized, among which cyanide bath is particularly preferable.

Further, a controlling method of the alloy ratio of alloy layer to be formed has conventionally been established sufficiently, such as the alloy ratio of silver and antimony in an alloy thereof and the alloy ratio of copper and tin in bronze, and the present invention also may conform thereto. The alloy ratio is controlled by current density, temperature and plating solution composition, such as examples shown in the following Tables 1 to 13.

An additive such as nonionic or cationic surfactant may be contained in the composition of a plating solution for the purpose of imparting levelling, brightness and stability to an electrodeposited film. The kind of these additives or the content thereof in a bath varies with the kind of baths to be used.

In electroplating, it is preferable to use a base material to be coated for a cathode and basically use metal as a main constituent element of a film for an anode. For example, silver is preferably used for an anode in the case of forming (a) a simple silver layer and (b) an alloy layer of silver and antimony. The temperature of a plating solution is properly determined by the alloy ratio of a film, current density and the physical properties of a film, which temperature is typically approximately 10 to 80°C. Current density also is properly determined in consideration of the desirable alloy ratio of an alloy film and working efficiency, which current density is typically in a range of approximately 0.1 to 10 A/cm². The thickness of an intended film can be controlled by current density, bath temperature and plating time.

Preferable examples of plating solution composition and plating conditions in the case where (a) a simple silver layer, (b) an alloy layer of silver and antimony, (c-1) a bronze layer, (c-2) an alloy layer of copper and zinc, (d) a ternary alloy layer of copper, tin and zinc, (e) a simple zinc layer, or (f) an alloy layer of zinc and copper is applied to an under layer are shown in Tables 1 to 7 respectively. Preferable examples of plating solution composition and plating conditions in the case where (g) a simple tin layer, (h-1) an alloy layer of tin and copper, (h-2) an alloy layer of tin and silver, (h- 3) a ternary alloy layer of tin, copper and silver, (i) a simple indium layer, or (j) an alloy layer of indium and silver is subjected to an upper layer are shown in Tables 8 to 13 respectively. It is needless to say that the above-mentioned plating solution composition and plating conditions are not limited to these examples.

**Table 1**

| (a) Simple Silver Layer | |
|---|---|
| Plating Solution Composition and Conditions | |
| Silver Cyanide | 10 to 50 g/L |
| Potassium Cyanide | 20 to 150 g/L |
| Temperature | Room Temperature |
| Current Density | 0.1 to 0.5 A/dm² |
| Anode | Silver |

**Table 2**

| (b) Alloy Layer of Silver and Antimony | |
|---|---|
| Plating Solution Composition and Conditions | |
| Silver Cyanide | 10 to 50 g/L |
| Potassium Cyanide | 10 to 200 g/L |
| Antimony Chloride | 0.1 to 5 g/L |
| Temperature | 10 to 30°C |
| Current Density | 1 to 10 A/dm² |
| Anode | Silver |

**Table 3**

| (c-1) Bronze Layer | |
|---|---|
| Plating Solution Composition and Conditions | |
| Copper Cyanide | 15 to 50 g/L |
| Potassium Cyanide | 50 to 100 g/L |
| Potassium Stannate | 30 to 70 g/L |
| Potassium Hydroxide | 8 to 15 g/L |
| Rochelle Salt | 45 to 75 g/L |
| Temperature | 20 to 80°C |
| Current Density | 1 to 10 A/dm² |
| Anode | Copper |

**Table 4**

| (c-2) Alloy of Copper and Zinc | |
|---|---|
| Plating Solution Composition and Conditions | |
| Copper Cyanide | 15 to 50 g/L |
| Zinc Cyanide | 5 to 20 g/L |
| Sodium Cyanide | 20 to 100 g/L |
| Sodium Carbonate | 20 to 50 g/L |
| Ammonia Water | 1 to 5 ml/L |
| Temperature | 20 to 80°C |
| Current Density | 1 to 10 A/dm² |
| Anode | Copper |

**Table 5**

| (d) Ternary Alloy of Copper, Tin and Zinc | |
|---|---|
| Plating Solution Composition and Conditions | |
| Copper Cyanide | 15 to 50 g/L |
| Potassium Cyanide | 30 to 100 g/L |
| Potassium Stannate | 10 to 50 g/L |
| Zinc Cyanide | 5 to 20 g/L |
| Potassium Hydroxide | 8 to 15 g/L |
| Rochelle Salt | 45 to 75 g/L |
| Temperature | 20 to 80°C |
| Current Density | 1 to 10 A/dm² |
| Anode | Copper |

**Table 6**

| (e) Simple Zinc Layer | |
|---|---|
| Plating Solution Composition and Conditions | |
| Zinc Cyanide | 30 to 100 g/L |
| Sodium Cyanide | 30 to 150 g/L |
| Sodium Hydroxide | 10 to 100 g/L |
| Temperature . | Room Temperature |
| Current Density | 1 to 10 A/dm² |
| Anode | Zinc |

**Table 7**

| (f) Alloy Layer of Zinc and Copper | |
|---|---|
| Plating Solution Composition and Conditions | |
| Copper Cyanide | 5 to 20 g/L |
| Zinc Cyanide | 30 to 100 g/L |
| Sodium Cyanide | 30 to 150 g/L |
| Sodium Hydroxide | 10 to 100 g/L |
| Temperature | Room Temperature |
| Current Density | 1 to 10 A/dm² |
| Anode | Zinc |

**Table 8**

| (g) Simple Tin Layer | |
|---|---|
| Plating Solution Composition and Conditions | |
| Tin Methanesulfonate | 10 to 100 g/L |
| Methanesulfonic Acid | 50 to 200 g/L |
| Additive | 10 to 50 mL/L |
| Temperature | 10 to 40°C |
| Current Density | 1 to 10 A/dm² |
| Anode | Tin |

**Table 9**

| (h-1) Alloy Layer of Tin and Copper | |
|---|---|
| Plating Solution Composition and Conditions | |
| Tin Methanesulfonate | 10 to 100 g/L |
| Copper Methanesulfonate | 0.1 to 5 g/L |
| Methanesulfonic Acid | 50 to 200 g/L |
| Additive | 10 to 50 mL /L |
| Temperature | 10 to 40°C |
| Current Density | 1 to 10 A/dm² |
| Anode | Tin |

**Table 10**

| (h-2) Alloy Layer of Tin and Silver | |
|---|---|
| Plating Solution Composition and Conditions | |
| Tin Methanesulfonate | 10 to 100 g/L |
| Silver Methanesulfonate | 0.1 to 5 g/L |
| Rochelle Salt | 100 to 200 g/L |
| Additive | 10 to 50 mL /L |
| Temperature | 10 to 40°C |
| Current Density | 1 to 10 A/dm² |
| Anode | Tin |

**Table 11**

| (h-3) Ternary Alloy Layer of Tin, Copper and Silver | |
|---|---|
| Plating Solution Composition and Conditions | |
| Tin Methanesulfonate | 10 to 100 g/L |
| Silver Methanesulfonate | 0.1 to 5 g/L |
| Copper Methanesulfonate | 0.1 to 5 g/L |
| Rochelle Salt | 100 to 200 g/L |
| Additive | 10 to 50 mL /L |
| Temperature | 10 to 40°C |
| Current Density | 1 to 10 A/dm² |
| Anode | Tin |

**Table 12**

| (i) Indium Simple | |
|---|---|
| Plating Solution Composition and Conditions | |
| Indium Methanesulfonate | 50 to 200 g/L |
| Sodium Methanesulfonate | 10 to 50 g/L |
| Additive | 1 to 5 mL /L |
| Temperature | 20 to 50 °C |
| Current Density | 1 to 5 A/dm² |
| Anode | Indium |

**Table 13**

| (j) Alloy of Indium and Silver | |
|---|---|
| Plating Solution Composition and Conditions | |
| Indium Chloride | 30 to 100 g/L |
| Silver Cyanide | 1 to 20 g/L |
| Potassium Cyanide | 20 to 100 g/L |
| Glucose | 10 to 50 g/L |
| Temperature | 20 to 50°C |
| Current Density | 0.1 to 5 A/dm² |
| Anode | Indium |

The film thickness of the present invention, as previously mentioned, is not particularly limited and may be determined by uses of sliding parts to be coated therewith and the properties of sliding function to be required, and such thickness is preferably set in a range of not hindering the object of the present invention. Specifically, the thickness of an under layer is preferably approximately 1 to 1, 000 µm, more preferably approximately 10 to 500 µm, and the thickness of an upper layer is preferably approximately 1 to 200 µm, more preferably approximately 5 to 30 µm.

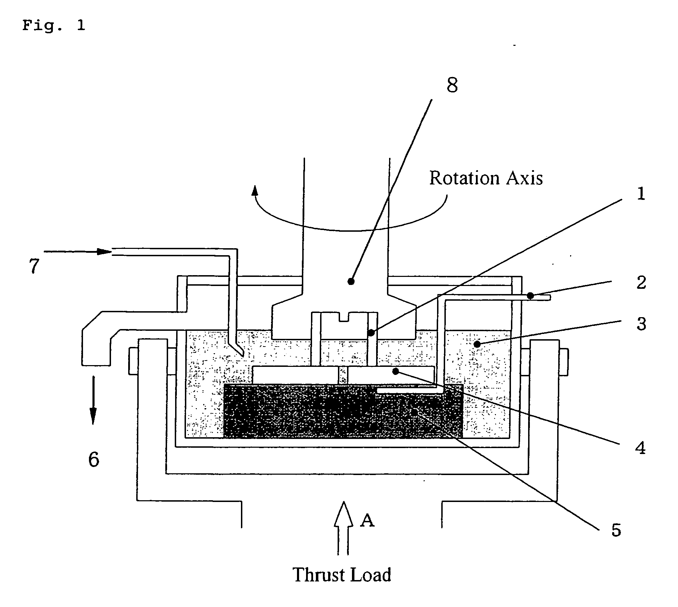

Sliding properties of sliding parts, such as seizing resistance and wear resistance, were evaluated by a thrust wear resistance testing method employing a device shown in Fig. 1. Examples of a method of evaluating a base material coated with a film of the present invention are hereinafter described.

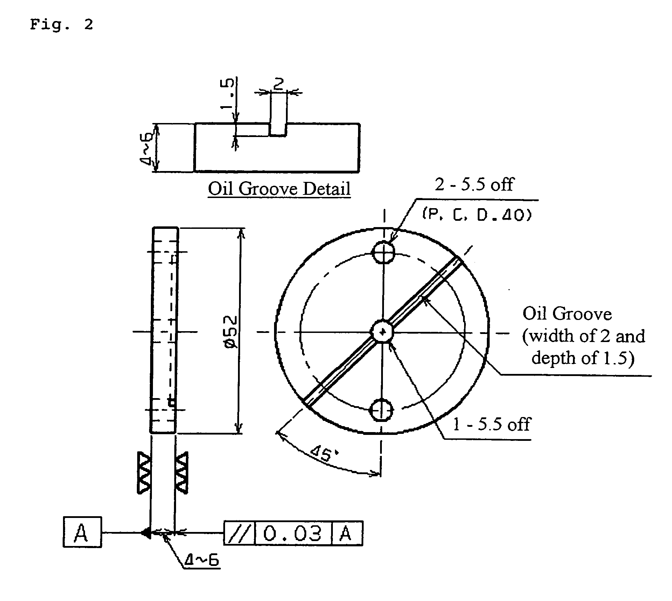

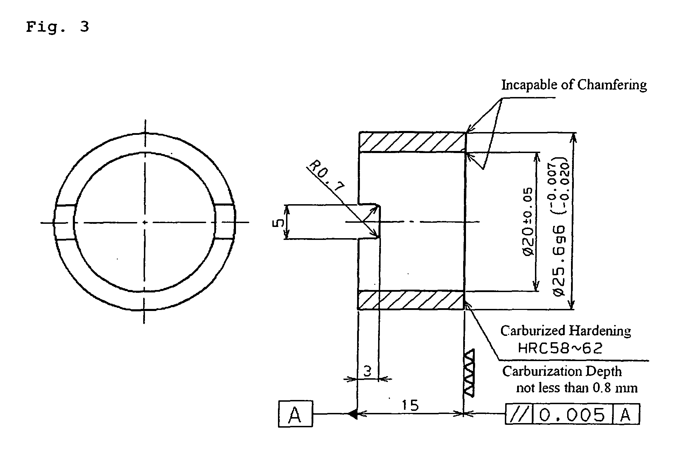

A mating material made of SCM420H as a carburized and quenched material in a ring shape shown in Fig. 3 is fixed to a rotation axis (8) in Fig. 1, and a base material (a test piece) coated with a film of the present invention having a shape shown in Fig. 2 is fixed to a fixing jig (5) for a test piece in Fig. 1. During the test, the inside of a device of Fig. 1 is previously filled with a lubricating oil, which is circulated by supplying a lubricating oil from a lubricating oil supply port (7) at a constant rate and overflowing a lubricating oil through a lubricating oil overflow outlet (6) . Then, a mating material and a test piece are subjected to sliding while rotating a rotation axis (8) and increasing a thrust load in the direction A, the thrust load (N) being controlled by a program.

Thrust load, the number of rotations, the temperature of a test piece, the change of frictional force are continuously measured during the test to evaluate seizing resistance and wear resistance of the test piece.

With regard to seizing resistance, specifically, a thrust load was increased with a gradient by a program to calculate a pressure (P) per unit area applied to a sliding portion of a test piece from a thrust load value at a point of time when seizing is caused in a test piece, and then evaluate by a PV value obtained by multiplying this P value by a sliding velocity (V). At this time, a larger PV value brought a better evaluation of seizing resistance. A point of time when baking is caused signifies that either of (1) a point of time when the temperature of a test piece amounted to 250°C and (2) a point of time when the frictional force amounted to 50 N·cm.

Wear resistance was evaluated in such a manner as to subject a mating material and a test piece to sliding at a constant load for a constant period of time and thereafter measure the depth of wear tracks remaining in a test piece. The smaller depth of wear tracks brought the better evaluation of wear resistance.

Whether sliding properties of an electrodeposited film of the present invention was good or bad was determined by using copper alloy conventionally known as a superior material for sliding for a comparative material.

An electrodeposited film of the present invention can be applied to all sliding parts, in which high sliding properties are required, such as a bush and a thrust plate used for bearings of general machinery, a swash plate used for a compressor for an air conditioner such as car air-conditioning and a refrigerator, a cylinder block and a piston shoe incorporated into a hydraulic unit, a valve plate, a plate for automatic transmission, and precision parts of automobiles and motorbikes.

### WORKING EXAMPLES

Preferable Working Examples, Comparative Examples and Test Examples thereof in the present invention are hereinafter described, and the present invention is not limited to the following Working Examples and the like. Base materials used in the Comparative Examples and Working Examples are all carbon steel S35C, and base materials previously molded into a shape shown in Fig. 2 was coated with films such as Working Examples and thereafter used as test pieces in Test Examples.

Single layer films and double layer films described in the following Comparative Examples 1 to 10 and Working Examples 1 to 18 were prepared.

### Comparative Example 1

### A single layer film of an alloy of tin and silver (Sn-Ag)

A base material was previously subjected to pretreatments of degreasing, electrolytic degreasing and pickling in the conventional manner. Subjecting the base material to a cathode and a tin plate to an anode, the base material was electroplated under the conditions of room temperature and a current density of 2 A/dm² in an organic acid bath consisting of 40 g/L of tin methanesulfonate, 1 g/L of silver methanesulfonate, 200 g/L of Rochelle salt and 10 g/L of a succinic acid derivative. The alloy ratio of silver in the film was analyzed to be 5 weight %.

### Comparative Example 2

### A single layer film of an alloy of tin and copper (Sn-Cu)

The similar pretreatments to Comparative Example 1 were performed for a base material, and thereafter subjecting the base material to a cathode and a tin plate to an anode, the base material was electroplated under the conditions of room temperature and a current density of 3 A/dm² in an organic acid bath consisting of 30 g/L of tin methanesulfonate, 2 g/L of copper methanesulfonate, 150 g/L of methanesulfonic acid, 2 g/L of a thiourea derivative and 5 g/L of a nonionic surfactant. The alloy ratio of copper in the film was analyzed to be 2 weight %.

### Comparative Example 3

### A single layer film of tin simple (Sn)

The similar pretreatments to Comparative Example 1 were performed for a base material, and thereafter subjecting the base material to a cathode and a tin plate to an anode, the base material was electroplated under the conditions of room temperature and a current density of 3 A/dm² in an organic acid bath consisting of 30 g/L of tin methanesulfonate, 150 g/L of methanesulfonic acid, 2 g/L of a thiourea derivative and 5 g/L of a nonionic surfactant.

### Comparative Example 4

### A single layer film of an alloy of silver and antimony (Ag-Sb)

A base material was previously subjected to pretreatments of degreasing, electrolytic degreasing and pickling in the conventional manner, and subsequently strike plating with silver was carried out in the conventional manner. Subjecting the base material to a cathode and a silver plate to an anode, the base material was electroplated under the conditions of room temperature and a current density of 1 A/dm² in a cyanide bath consisting of 40 g/L of silver cyanide, 70 g/L of potassium cyanide and 5 g/L of antimony chloride. The alloy ratio of antimony in the film was analyzed to be 1 weight %.

### Comparative Example 5

### A single layer film of bronze (Cu-Sn)

The similar pretreatments to Comparative Example 1 were performed for a base material, and thereafter subjecting the base material to a cathode and a copper plate to an anode, the base material was electroplated under the conditions of a temperature of 60°C and a current density of 3 A/dm² in a cyanide bath consisting of 30 g/L of copper cyanide, 50 g/L of potassium cyanide, 35 g/L of potassium stannate, 10 g/L of potassium hydroxide and 50 g/L of Rochelle salt. The alloy ratio of tin in the film was analyzed to be 10 weight %.

### Comparative Example 6

### A single layer film of an alloy of copper and zinc (Cu-Zn)

The same pretreatments as Comparative Example 1 were performed for a base material, and thereafter subjecting the base material to a cathode and a copper plate to an anode, the base material was electroplated under the conditions of room temperature and a current density of 1 A/dm² in a cyanide bath consisting of 30 g/L of copper cyanide, 10 g/L of zinc cyanide, 40 g/L of sodium cyanide, 10 g/L of sodium carbonate and 2 ml/L of ammoniawater. The alloyratio of zinc in the filmwas analyzed to be 28 weight %.

### Comparative Example 7

### A single layer film of simple silver (Ag)

The similar pretreatments to Comparative Example 4 were performed for a base material, and thereafter subjecting the base material to a cathode and a silver plate to an anode, the base material was electroplated under the conditions of room temperature and a current density of 0.5 A/dm² in a cyanide bath consisting of 40 g/L of silver cyanide and 70 g/L of potassium cyanide.

### Comparative Example 8

### A single layer film of an alloy of zinc and copper (Zn-Cu)

The similar pretreatments to Comparative Example 1 were performed for a base material, and thereafter subjecting the base material to a cathode and a zinc plate to an anode, the base material was electroplated on the conditions of room temperature and a current density of 5 A/dm² in a cyanide bath consisting of 10 g/L of copper cyanide, 60 g/L of zinc cyanide, 50 g/L of sodium cyanide and 20 g/L of sodium hydroxide. The alloy ratio of copper in the film was analyzed to be 35 weight %.

### Comparative Example 9

### A single layer film of simple zinc (Zn)

The similar pretreatments to Comparative Example 1 were performed for a base material, and thereafter subjecting the base material to a cathode and a zinc plate to an anode, the base material was electroplated under the conditions of room temperature and a current density of 5 A/dm² in a cyanide bath consisting of 50 g/L of zinc cyanide, 100 g/L of sodium cyanide and 80 g/L of sodium hydroxide.

### Comparative Example 10

### A double layer film comprising an under layer: bronze (Cu-Sn) and an upper layer: nickel into which PTFE (Teflon (registered trademark)) was dispersed (Ni/PTFE)

The similar pretreatments to Comparative Example 1 were performed for a base material, which thereafter was plated with an under layer in accordance with Comparative Example 5. Next, subjecting the base material coated with an under layer to a cathode and a nickel plate to an anode, the base material was electroplated on the conditions of a temperature of 50°C and a current density of 3 A/dm² in a sulfamic acid bath consisting of 300 g/L of nickel sulfamate, 10 g/L of nickel chloride, 30 g/L of boric acid, 30 g/L of PTFE particles and 3 ml/L of a cationic surfactant. The dispersion ratio of PTFE in an upper layer was 7 weight % through analysis.

### Working Example 1

### A double layer film comprising an under layer: bronze (Cu-Sn) and an upper layer: indium simple (In)

The similar pretreatments to Comparative Example 1 were performed for a base material, and thereafter the under layer of such pretreated base was plated in accordance with Comparative Example 5. Next, subjecting the above test piece with the coated under layer to a cathode and an indium plate to an anode, the base material was electroplated under the conditions of room temperature and a current density of 3 A/dm² in an organic acid bath consisting of 100 g/L of indium methanesulfonate, 20 g/L of sodium methanesulfonate and 1 ml/L of a cationic surfactant.

### Working Example 2

### A double layer film comprising an under layer: bronze (Cu-Sn) and an upper layer: an alloy of indium and silver (In-Ag)

The similar pretreatments to Comparative Example 1 were performed for a base material, and thereafter the under layer of the base material was plated in accordance with Comparative Example 5. Next, subjecting the above test piece with the coated under layer to a cathode and an indium plate to an anode, the base material was electroplated under the conditions of room temperature and a current density of 0.3 A/dm² in a cyanide bath consisting of 70 g/L of indium chloride, 5 g/L of silver cyanide, 35 g/L of potassium cyanide and 15 g/L of glucose. The alloy ratio of indium in the film was analyzed to be 63 weight %.

### Working Examples 3, 13 and 14

### A double layer film comprising an under layer: an alloy of silver and antimony (Ag-Sb) and an upper layer: an alloy of tin and copper (Sn-Cu)

In accordance with Comparative Example 4, pretreatments were performed for a base material, and thereafter the under layer of the base material was plated. Next, the upper layer of the base material was plated in accordance with Comparative Example 2.

### Working Examples 4, 15 and 16

### A double layer film comprising an under layer: bronze (Cu-Sn) and an upper layer: an alloy of tin and copper (Sn-Cu)

The similar pretreatments to Comparative Example 1 were performed for a base material, and thereafter its under layer was plated in accordance with Comparative Example 5. Next, the upper layer of the base material was plated in accordance with Comparative Example 2.

### Working Example 5

### A double layer film comprising an under layer: an alloy of copper and zinc (Cu-Zn) and an upper layer: an alloy of tin and copper (Sn-Cu)

The similar pretreatments to Comparative Example 1 were performed for a base material, and thereafter its under layer was plated in accordance with Comparative Example 6. Next, the base material was plated with an upper layer in accordance with Comparative Example 2.

### Working Example 6

### A double layer film comprising an under layer: a ternary alloy of copper, tin and zinc (Cu-Sn-Zn) and an upper layer: an alloy of tin and copper (Sn-Cu)

The similar pretreatments to Comparative Example 1 were performed for a base material, and thereafter subjecting the base material to a cathode and a copper plate to an anode, the under layer of the base material was electroplated under the conditions of a temperature of 60°C and a current density of 2 A/dm² in a cyanide bath consisting of 35 g/L of copper cyanide, 70 g/L of sodium cyanide, 25 g/L of potassium stannate, 5 g/L of zinc cyanide, 10 g/L of potassium hydroxide and 50 g/L of Rochelle salt. Next, the upper layer of the base material was plated in accordance with Comparative Example 2.

### Working Example 7

### A double layer film comprising an under layer: silver simple (Ag) and an upper layer: an alloy of tin and copper (Sn-Cu)

The similar pretreatments to Comparative Example 4 were performed for a base material, and thereafter its under layer was plated in accordance with Comparative Example 7. Next, the upper layer of the base material was plated in accordance with Comparative Example 2.

### Working Example 8

### A double layer film comprising an under layer: an alloy of zinc and copper (Zn-Cu) and an upper layer: an alloy of tin and copper (Sn-Cu)

The similar pretreatments to Comparative Example 1 were performed for a base material, which thereafter was plated with an under layer in accordance with Comparative Example 8. Next, the base material was plated with an upper layer in accordance with Comparative Example 2.

### Working Example 9

### A double layer film of an under layer: simple zinc (Zn) and an upper layer: an alloy of tin and copper (Sn-Cu)

The similar pretreatments to Comparative Example 1 were performed for a base material, which thereafter was plated with an under layer in accordance with Comparative Example 9. Next, the base material was plated with an upper layer in accordance with Comparative Example 2.

### Working Examples 10 and 17

### A double film of an under layer: an alloy of silver and antimony (Ag-Sb) and an upper layer: simple tin (Sn)

In accordance with Comparative Example 4, pretreatments were performed for a base material, which thereafter was plated with an under layer. Next, the base material was plated with an upper layer in accordance with Comparative Example 3.

### Working Examples 11 and 18

### A double film of an under layer: bronze (Cu-Sn) and an upper layer: simple tin (Sn)

The similar pretreatments to Comparative Example 1 were performed for a base material, which thereafter was plated with an under layer in accordance with Comparative Example 5. Next, the base material was plated with an upper layer in accordance with Comparative Example 3.

### Working Example 12

### A double layer film of an under layer: an alloy of silver and antimony (Ag-Sb) and an upper layer: an alloy of tin and silver (Sn-Ag)

In accordance with Comparative Example 4, pretreatments were performed for a base material, which thereafter was plated with an under layer. Next, the base material was plated with an upper layer in accordance with Comparative Example 1.

### Test Examples

### Evaluation test on sliding properties

Test pieces coated with a film of Comparative Examples 1 to 10 or Examples 1 to 18 were each fixed to a test piece fixing jig (5) of a thrust wear resistance testing device in Fig. 1 to perform an evaluation test (n=2) on sliding properties of each film under the conditions of Table 15. Test results (seizing resistance, wear resistance, film thickness, hardness and general evaluation) were shown in Table 17. With respect to seizing resistance and wear resistance, copper alloys A and B conventionally used as a superior material for sliding were similarly tested as materials for comparison, and each of a PV value and a wear track depth obtained particularly in the case of testing a copper alloy A were regarded as 1 to denote seizing resistance and wear resistance by relative values thereto (a relative value of a PV value: pv, a relative value of a wear track depth: d). Specifically, a larger value of pv than 1 brought a better evaluation of seizing resistance of a film, while a smaller value of d than 1 brought a better evaluation of wear resistance of a film. The content by weight % of constituent elements of copper alloys A and B is shown in Table 14. Bal. denotes the balance in Table 14. In Table 17, the general evaluation of each film was denoted by signs, which conformed to the criteria for evaluation of pv and d shown in Table 16.

**Table 14**

| | | Cu | Mn | Al | Fe | Pb | Zn | Sn | P |
|---|---|---|---|---|---|---|---|---|---|
| A | JIS H5120 CAC406 | Bal. | - | - | - | 5.2 | 5.5 | 4.5 | 0.08 |
| B | DIN17660 CuZn40A12 | Bal. | 1.5 | 2.0 | 0.3 | 0.5 | 37 | - | - |
| (wt/%) | | | | | | | | | |

**Table 15**

| Contents | Evaluation Test on Seizing Resistance | Evaluation Test on Wear Resistance |
|---|---|---|
| Thrust Load | Load increased by program (max. 5,880 N) | Constant load 1,000 N (P = 5 N/mm²) |
| Test Time | Until seizing is caused | 2 hours |
| Oil Groove | Present | |
| Number of Rotations | 5,447 rpm (V = 6.5 m/s) | |
| Kind of Lubricating Oil | Gear oil 75W-90 | |
| Lubricating Method | Immersion + supply 240 ml/min | |
| Oil Temperature | Room temperature (15°C) | |
| Quality of Mating Material | SCM420H (Carburized and hardened material) | |
| Surface Roughness of Mating Material | 0.6 µm Ry | |
| Hardness of Mating Material | HRC 60 | |
| Number of Tests | n = 2 | |

**Table 16**

| Relative Value of Seizing PV Value: pv | Relative Value of Wear Track Depth: d | General Evaluation | |
|---|---|---|---|
| pv < 1 | 5 ≤ d or baking | × | Rejected |
| pv ≥ 1 | 5 ≤ d | × | Rejected |
| | 0.9 < d < 5 | ○ | Pass |
| | d ≤ 0.9 | ⓞ | Pass |

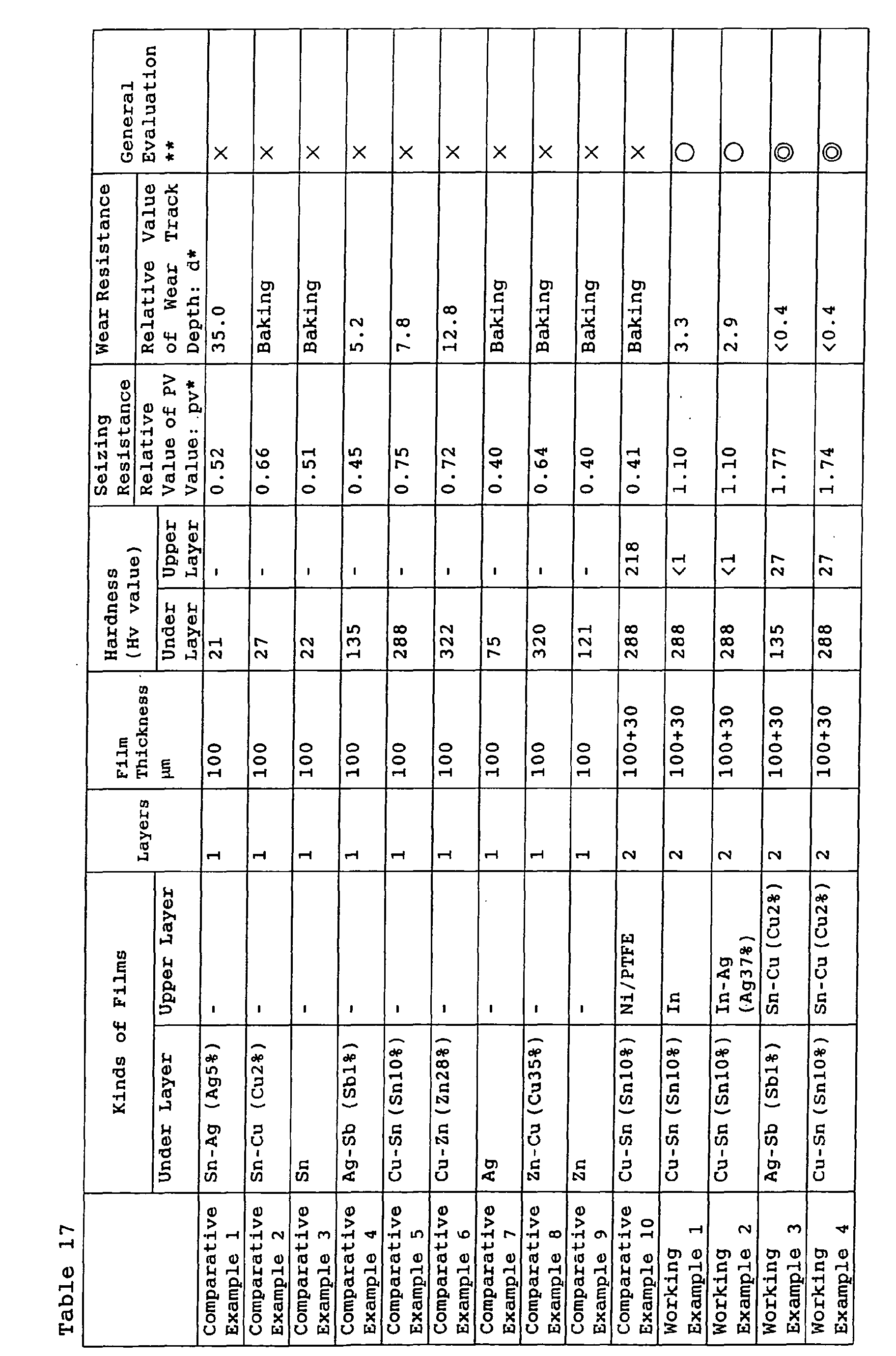

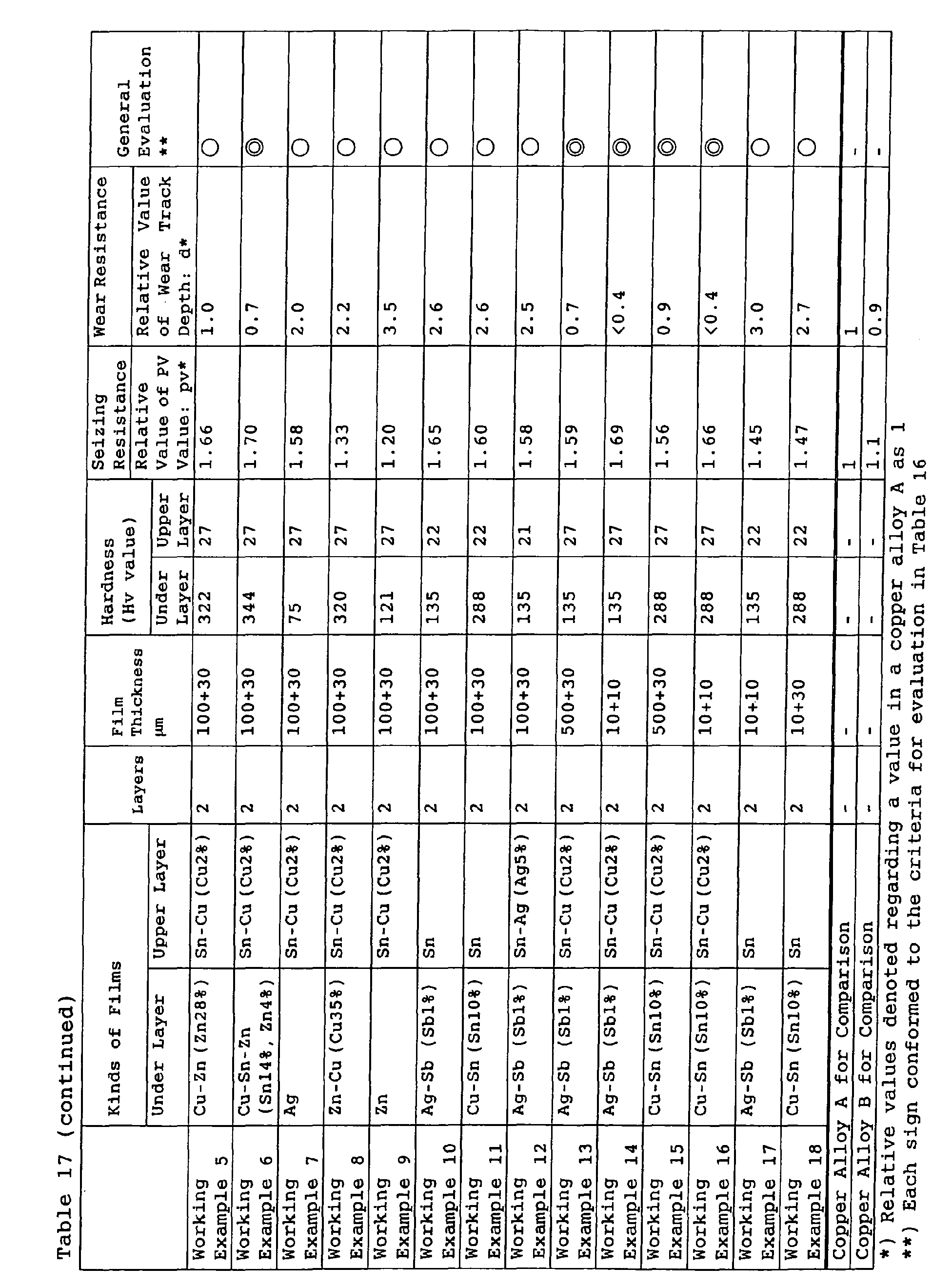

With regard to single layer films of Comparative Examples 1 to 9, all of general evaluations were denoted by the sign "rejected", and it was found that a film exhibiting favorable sliding properties was not obtained in a single layer. On the contrary, films (Working Examples 1 to 18) composed of double layers comprising an under layer and an upper layer except for Comparative Example 10 offered favorable values equal or higher to a copper alloy A for comparison. This result revealed that films of Working Examples 1 to 18 were superior materials for sliding to a copper alloy A in view of being safe for the environment by reason of having sliding properties equal or higher to a copper alloy A and containing no lead. In particular, it was found that films of Working Examples 3, 4, 6, and 13 to 16 were greatly superior materials for sliding for the reason that both of seizing resistance and wear resistance thereof were superior to a copper alloy A for comparison, and the favorable sliding properties were equally exhibited by all of these films irrespective of film thickness.

When test pieces coated with films of the above-mentioned Working Examples 1 to 18 were manufactured while replacing a base material with aluminum, aluminum alloy, titanium, titanium alloy, copper, copper alloy, stainless steel or ceramics to perform evaluation test on sliding properties of the above-mentioned test examples, all of these films exhibited the similar seizing resistance and wear resistance to the case where a base material was S35C; therefore, it was apparent that the above-mentioned films exhibited superior sliding properties on all base materials.

### INDUSTRIAL APPLICABILITY

An electrodeposited film of the present invention is superior in seizing resistance and wear resistance, so that sliding parts coated with this electrodeposited film have favorable sliding properties. Also, an electrodeposited film of the present invention can be applied to coating by an electroplating process, so as to easily coat a base material and be capable of being adapted to sliding parts in all shapes, which film can be conceived to be a superior material also in view of economy by reason of having no thermal influence on a base material and obtaining a superior smooth surface to thereby bring no necessity of particular postprocessing. In addition, an electrodeposited film of the present invention contains no lead in compositions thereof, so that sliding parts harmless to the human body and the environment can be provided.

## Claims

1. An electrodeposited film wherein an alloy layer or a simple metal layer with an Hv value of not less than 60 is applied to form an under layer, and an alloy layer or a simple metal layer with an Hv value of not more than 40 is applied to form an upper layer.

2. An electrodeposited film wherein (a) a simple silver layer, (b) an alloy layer of silver and antimony, (c) an alloy layer of copper and tin or zinc, (d) a ternary alloy layer of copper, tin and zinc, (e) a simple zinc layer, or (f) an alloy layer of zinc and copper is applied to form an under layer, and (g) a simple tin layer, (h) an alloy layer of tin and copper and/or silver, (i) a simple indium layer, or (j) an alloy layer of indium and silver is applied to form an upper layer.

3. The electrodeposited film according to Claim 1 or 2, wherein the amount of tin contained in the upper layer is 90 to 100 weight % of the upper layer when the upper layer is (h) an alloy layer of tin and copper and/or silver.

4. The electrodeposited film according to Claim 1 or 2, wherein the amount of indium contained in the upper layer is 60 to 100 weight % of the upper layer when the upper layer is (j) an alloy layer of indium and silver.

5. The electrodeposited film according to Claim 1 or 2, wherein the amount of silver contained in the under layer is 90 to 100 weight % of the under layer when the under layer is (b) an alloy layer of silver and antimony.

6. The electrodeposited film according to Claim 1 or 2, wherein the amount of copper contained in the under layer is 50 to 99 weight % of the under layer when the under layer is (c) an alloy layer of copper and tin or zinc, or (d) a ternary alloy layer of copper, tin and zinc.

7. The electrodeposited film according to Claim 1 or 2, wherein the amount of zinc contained in the under layer is 60 to 100 weight % of the under layer when the under layer is (f) an alloy layer of zinc and copper.

8. The electrodeposited film according to any one of Claims 1 to 7, wherein the under layer has a thickness of 1 to 1,000 µm and the upper layer has a thickness of 1 to 200 µm.

9. Sliding Parts wherein the surface of a base material is coated with the electrodeposited film according to any one of Claims 1 to 8.

10. The sliding parts according to Claim 9, wherein the base material issteel, stainless steel, aluminum, aluminum alloy, titanium, titanium alloy, copper, copper alloy or ceramics.
